(19) Europäisches Patentamt
European Patent Office
Office européen des brevets

(11) EP 2 233 991 A1

(12) EUROPÄISCHE PATENTANMELDUNG

(43) Veröffentlichungstag:
29.09.2010 Patentblatt 2010/39

(51) Int Cl.:
**G05B 19/042** (2006.01)

(21) Anmeldenummer: 09156151.4

(22) Anmeldetag: 25.03.2009

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(71) Anmelder: **Siemens Aktiengesellschaft**
**80333 München (DE)**

(72) Erfinder:
• **Barthel, Herbert**
**91074 Herzogenaurach (DE)**
• **List, Richard**
**92266 Ensdorf (DE)**
• **Maier, Mario**
**92266 Ensdorf (DE)**
• **Maier, Martin**
**73760 Ostfildern (DE)**
• **Schenk, Andreas**
**91052 Erlangen (DE)**

(54) **Sicherheitsgerichtetes Automatisierungssystem mit automatischer Adresswiederherstellung**

(57) Die Erfindung betrifft ein industrielles Automatisierungssystem zur Steuerung der Betriebsmittel eines technischen Prozesses. Es weist fehlersichere Module (CF1, CF2; DF1, DF2) zum Austausch von Prozessdaten mit den Betriebsmitteln, insbesondere von Stell- und Messsignalen, Stationen (C, D) mit über einen Rückwandbus (CR, DR) verbundenen Steckplätzen (CP0-CP5; DP0-DP5) für Module, eine Zentraleinheit (H1, H2) zumindest zur Verarbeitung von Prozesssignalen des technischen Prozesses und einen Feldbus (F) zur Übertragung von Daten zwischen der Zentraleinheit und den Stationen auf. Erfindungsgemäß sind die Adressbeziehung zur datentechnischen Adressierung eines fehlersicheren Moduls durch die Zentraleinheit über den Feldbus im jeweiligen Modul in einem ersten Speicher (CF1S, CF2S; DF1S, DF2S) remanent hinterlegt und zusätzlich in der dazugehörigen Station remanent gesichert. Die Erfindung bietet den besonderen Vorteil, dass eine sichere automatische Wiederherstellung der Adressbeziehungen besonders von fehlersicheren Modulen erreicht werden kann. Auf Grund der remanenten, netzausfallsicheren Sicherung von bereits z.B. während einer Projektierung als gültig erkannten Adressbeziehungen auf Stationsebene ist es beim einem Modultausch möglich, dass ein neues Modul die korrekte Adressbeziehungen des nicht mehr vorhandenen alten Moduls aus den Sicherungsmitteln in der Station rück lädt.

FIG 1

EP 2 233 991 A1

**Beschreibung**

Die Erfindung betrifft ein industrielles Automatisierungssystem.

Bei einem sicherheitsgerichteten Automatisierungssystem werden Daten zwischen zumindest einer sicherheitsgerichteten Zentraleinheit und Feldgeräten so übertragen, dass die zeitliche und inhaltliche Konsistenz der Daten zur Absicherung gegen Verfälschung gewährleistet ist. Dabei kann es sich sowohl um die Absicherung gegen die Gefährdung von Personen, aber auch um die Anlagensicherheit handeln. Dabei werden fehlersichere Feldbussysteme eingesetzt, welche Daten in einer fehlersicheren Weise zwischen entsprechend fehlersicheren Komponenten austauschen, oder Fehler in einer sicheren Weise erkennen können, z.B. mit einer Restfehlerrate kleiner als 10-9 pro Stunde bzw. entsprechend der Spezifikation SIL3 für den Kommunikationsanteil. Standards für solche Feldbussysteme sind insbesondere die IEC 61508, IEC61784-3, EN 954-1 und EN 13849-1. Sicherheitsgerichtete vernetzte Automatisierungssysteme dieser Art werden typischerweise eingesetzt in der Fabrikautomation und Prozessautomatisierung, z.B. der Automobilfertigung/Maschinenbau/Anlagenbau, oder der Transporttechnik, z.B. bei Bahnen/Seilbahnen.

In einem sicherheitsgerichteten Feldbussystem müssen vor allem Fehler der Adressierung der im Bussystem verteilten Komponenten mit hohem Aufdeckungsgrad erkannt werden, so dass bei Vorhandensein eines Fehlers sicherheitsgerichtet reagiert werden kann. Als Komponenten sind insbesondere fehlersichere Module und Stationen in einem oder mehreren Subnetzen des Feldbussystems zusammengeschaltet, und werden über eine fehlersichere, auch sicherheitsgerichtet genannte Zentraleinheit angesteuert, insbesondere eine fehlersichere speicherprogrammierbare Steuerung.

Dabei stellen die Module die Schnittstellen zu den Betriebsmitteln eines technischen Prozesses dar, besonders zu den verteilt angeordneten Aktoren und Sensoren. Je nach Art und Ausstattung der Betriebsmittel müssen diesen ein oder mehrere Module unterschiedlichen Typs zugeordnet werden. So stehen Module z.B. mit digitalen oder analogen Eingängen, mit digitalen oder analogen Ausgängen, Mischmodule mit digitalen und analogen Ein- bzw. Ausgängen, Module mit unterschiedlichen Anzahlen von Eingangs- bzw. Ausgangkanälen bzw. verschiedenen Ein- und/oder Ausgangsspannungsbereichen u.v.m. zur Verfügung. Über die Module werden von der Zentraleinheit des Automatisierungssystems erzeugte Stellsignale an den technischen Prozess ausgegeben bzw. dort anfallende Messsignale eingelesen, d.h. Prozessdaten ausgetauscht. In Ergänzung stellen Stationen eine Vielzahl von Steckplätzen zur Aufnahme von Modulen bereit und können als Einschubgehäuse ausgeführt sein. Jede Station ist mit einem Stationskopf zum Anschluss an den Feldbus ausgerüstet. Darüber kann jedes in einer Station gesteckte Modul Daten mit einer fehlersicheren Zentraleinheit austauschen.

Weiterhin können Gruppen von Stationen in Subnetzen zusammengeschaltet sein, die bezüglich eines technischen Prozesses jeweils eine technologische Einheit bilden und von einer Zentraleinheit verwaltet werden. Diese stellt eine übergeordnete Verarbeitungseinheit dar, insbesondere eine fehlersichere speicherprogrammierbare Steuerung, welche mit Hilfe von Feldbusmastern den Datenaustausch mit verschiedenen Subnetzen organisiert. Der Datenaustausch zwischen Zentraleinheit und den Stationen bzw. Modulen in den Subnetzen erfolgt in der Regel mit Hilfe eines speziellen fehlersicheren Kommunikationsprotokolls, z.B. PROFIsafe nach IEC61784-3-3.

Ein Subnetz kann als Teil des gesamten Netzes sowie auch als geschlossener Adressraum angesehen werden, in dem jeder Station und jedem Modul eine eindeutige Adresse zum Datenaustausch über den Feldbus zugewiesen ist. Diese Adressen sind ein relevanter Teil der Projektierdaten des jeweiligen Subnetzes. Sie werden u.a. in der fehlersicheren Zentraleinheit verwaltet und nachfolgend als Adressbeziehungen bezeichnet. Dabei kommt in einem fehlersicheren Automatisierungssystem der Adressbeziehung eines jeden Moduls eine besondere Bedeutung zu. Hierunter wird die komplette Adresshierarchie verstanden, mit deren Hilfe ein Modul in einem bestimmten Subnetz von der Zentraleinheit über den Feldbus datentechnisch erreichbar ist.

Eine solche Adressbeziehung umfasst somit zumindest die exakte topologische Adresse eines Moduls innerhalb des jeweiligen Subnetzes und die Adresse der übergeordneten Zentraleinheit. Weiterhin können in einer Adressbeziehung auch eine Kennung des jeweiligen Modultyps und gegebenenfalls eine zusätzliche Signatur enthalten sein. Zur Aufdeckung von Transfer und Speicherfehlern kann über die Adressbeziehung eine Signatur errechnet und zusätzlich in der Adressbeziehung gespeichert werden. Die topologische Adresse eines Moduls umfasst zumindest die Adresse der Station, welche das Modul enthält, und die Adresse des Steckplatzes des Moduls in der jeweiligen Station. Zusätzlich kann die Adressbeziehung auch die Subnetzadresse der zugehörigen Station enthalten, sofern einige Stationen am Feldbus zu unterschiedlichen Subnetzen gruppiert sind. Die Adressbeziehung eines Moduls ist sowohl in einem remanenten Speicher im jeweiligen Modul selbst als auch in der Zentraleinheit gespeichert. Die Richtigkeit der Adressbeziehung wird durch das von der Zentraleinheit ausgeführte fehlersichere Kommunikationsprotokoll bei jeder Datenübertragung geprüft. Zusammenfassend gilt z.B.:

```
Adressbeziehung Modul =
Topologische Adresse Modul + Adresse Zentraleinheit + (Modul-
kennung + Signatur);


Topologische Adresse Modul =
(Subnetzadresse +) Stationsadresse + Steckplatzadresse;
```

In einem sicherheitsgerichteten Automatisierungssystem stellt der Tausch bzw. die Ergänzung eines Moduls einen besonders kritischen Fall dar. Hierdurch kann die Integrität des Automatisierungssystems insofern beschädigt werden, als dass durch Hantierungen mit Modulen, also z.B. eine Entnahme, Nachbestückung oder einen Tausch, der Adressraum fehlerhaft und damit ungültig werden kann. Es muss somit vor einer Wiederaufnahme des Betriebs einer technischen Anlage, welche von einem sicherheitsgerichteten Automatisierungssystem gesteuert wird, sichergestellt werden, dass insbesondere die im Automatisierungssystem verwalteten Adressbeziehungen aller Module korrekt sind oder zumindest mögliche Fehler eindeutig erkannt werden.

Diese Fehler müssen erkannt werden, da ansonsten beim Weiterbetrieb der sicherheitsgerichteten technischen Anlage das Automatisierungssystem auf logisch falsch zugeordnete Ein- oder Ausgänge reagieren würde. Im äußersten Fall könnte in unerwarteter Weise ein Betriebsmittel aktiviert werden, von dem der Anlagebediener annimmt, dass es stillgesetzt ist. Würde auf diese Weise z.B. ein Motor gestartet werden, an dem aber gerade Wartungsarbeiten durchgeführt werden, so wären Personenschäden nicht auszuschließen.

Ein besonders kritischer Fehler in den Adressbeziehungen von Modulen stellt z.B. eine Adressverschiebung dar. In einem solchen Fall ist die Adressbeziehung eines oder mehrerer Module so beschädigt, dass diese fälschlicherweise mit den Adressen von benachbarten Modulen in einer Station übereinstimmen, welche möglicherweise auch noch übereinstimmende Moduleigenschaften aufweisen. Ein solcher Fehler kann beim Betrieb der dazugehörigen technischen Anlage fatale Folgen habe. Ein weiterer kritischer Fehler liegt z.B. darin, dass der gesamte Adressiermechanismus des Automatisierungssystems, also die ordnungsgemäße Adressvergabe durch das Automatisierungssystem und die dabei beteiligten Komponenten, fehlerhaft arbeitet. Dies kann zur Folge haben, dass sich beim Betrieb der Anlage ein Modul unter der Adresse eines anderen, falschen Moduls beim Automatisierungssystem meldet, ohne dass das Automatisierungssystem diese Vertauschung auf Grund der im Übrigen übereinstimmenden Parameter bemerkt. Fehler der obigen Art können eine systematische oder zufällige Ursache haben. Sie können verursacht werden durch manuelle Bedienungsfehler, wie z.B. Verkabelungsfehler im Feldbus, Vertauschungen von Ports in Stationen, oder durch Hardwarefehler, wie z.B. zufällige Defekte in Netzwerkkomponenten, Rückwandbussen, Switches u.s.w..

Zur Vermeidung von Problemen der oben dargestellten Art sind verschiedene Lösungen bekannt. So kann z.B. ein Feldbus eingesetzt werden, der selbst Eigenschaften für eine Sicherheitstechnik aufweist, um die Konsistenz der Adressbeziehungen, insbesondere von Stationen und Modulen, zu gewährleisten und Fehler zu melden. Bei anderen Systemen müssen die Adressbeziehung manuell eingestellt oder im Falle eines Modultausches manuell angepasst werden. Hierzu kann z.B. die Adressbeziehung für jede Station oder jedes Modul z.B. durch Kodierschaltereinstellung oder den vorübergehenden Aufbau einer Punkt-zu-Punkt - Datenverbindung zwischen Zentraleinheit und der jeweiligen Komponente vor Ort manuell eingestellt werden. Bei manchen Systemen wird nach dem Austausch eines Moduls eine Funktionsprüfung aller Betriebsmittel gefordert, um mögliche Adressierungsfehler aufdecken zu können. Systeme dieser Art sind nachteilig, da entweder ein aufwendiger fehlersicherer Feldbus eingesetzt werden muss oder manuelle Inbetriebsetzungs- bzw. Wartungsmaßnahmen durch Betriebspersonal erforderlich sind.

Der Erfindung liegt die Aufgabe zu Grunde ein Automatisierungssystem anzugeben, womit eine sichere automatische Wiederherstellung der Adressbeziehung eines Moduls in einem vernetzten Automatisierungssystem erreicht bzw. möglicherweise dabei auftretende, nicht automatisch behebbare Fehler zumindest sicher aufgedeckt werden können.

Die Aufgabe wird gelöst mit dem in Anspruch 1 angegebenen Automatisierungssystem. Vorteilhafte weitere Ausführungen der Erfindung sind in den Unteransprüchen angegeben.

Das erfindungsgemäße Automatisierungssystem bietet den besonderen Vorteil, dass eine sichere automatische Wiederherstellung der Adressbeziehungen besonders von fehlersicheren Modulen erreicht werden kann. Auf Grund der remanenten, d.h. netzausfallsicheren Sicherung von bereits in der Vergangenheit, z.B. während einer Projektierung, als gültig erkannten Adressbeziehungen auf Stationsebene ist es insbesondere bei einem Modultausch möglich, dass ein neues Modul die korrekte Adressbeziehungen des nicht mehr vorhandenen alten Moduls quasi aus den Sicherungsmitteln in der Station rücklädt.

Derartige Wiederherstellungen von Adressbeziehungen können z.B. nach einem Modultausch aber auch einem automatischen Wiederanlauf des Automatisierungssystems in Folge einer vorübergehenden Unterbrechung der Spannungsversorgung notwendig werden. Die Erfindung ist auch bei einem Automatisierungssystem anwendbar, bei dem unterschiedliche autarke sicherheitsgerichtete Zentraleinheiten, d.h. Hosts, an einem einzigen Feldbus betrieben werden und die Module in einer Station unterschiedlichen Zentraleinheiten zugeordnet sind.

Die Erfindung ist weiterhin verwendbar bei einem Automatisierungssystem, bei dem bereits der Kopf einer Station als eine Zentraleinheit funktioniert. In diesem Falle werden die Adressbeziehungen über den Rückwandbus der Station an die gesteckten Module in der Station verteilt.

Das erfindungsgemäße Automatisierungssystem bietet den weiteren Vorteil, dass der Tausch eines Moduls möglich ist auch ohne den Einsatz von zusätzlichen Hilfsmitteln, z.B. einem Programmiergerät. Weiterhin wird der gleichzeitige Austausch von mehreren Modulen ermöglicht ohne, dass eine Funktionsprüfung der Adressvergabe notwendig ist. Zudem wird trotz eines gleichzeitigen Tausches von Stationsköpfen oder Modulen eine mögliche Vertauschung eines Busanschlusskabels erkannt. Schließlich ist es auf Grund der erfindungsgemäßen redundanten Sicherung quasi jeder Adressbeziehung auf Modulebene nicht mehr erforderlich, nach einem Tausch eines Moduls einen Verdrahtungs- oder Funktionstest durchzuführen.

Die Erfindung und weitere vorteilhafte Ausführungsformen werden nachfolgend an Hand der in den Figuren dargestellten Ausführungsbeispiele näher erläutert. Dabei zeigt

Fig. 1 beispielhaft die Topologie eines vernetzten Automatisierungssystems mit zwei Zentraleinheiten, denen Module in verteilt am Feldbus angeschlossenen Stationen zugeordnet ist,

Fig. 2 eine erste Ausführungsform der Erfindung, bei der jedem Modul ein eigener zusätzlicher Speicher insbesondere in einem Terminalmodul zugeordnet ist, und

Fig. 3 eine zweite Ausführungsform der Erfindung, bei der ein zentraler zusätzlicher Speicher für alle Module einer Station insbesondere in einem Stationskopf bzw. Busabschlussmodul vorhanden ist.

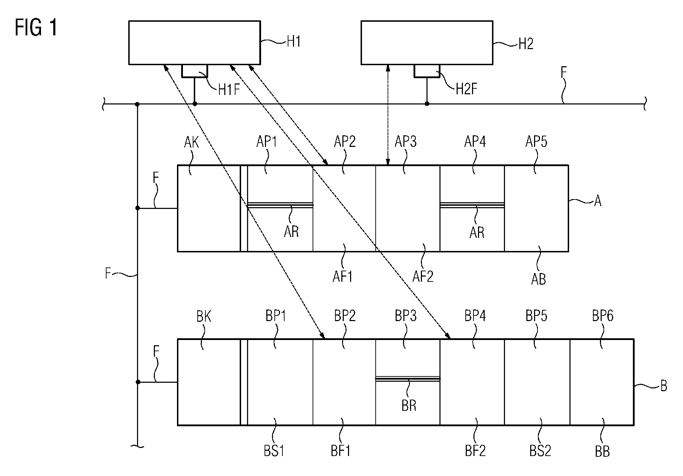

Fig. 1 zeigt die beispielhafte Topologie eines vernetzten Automatisierungssystems gemäß der Erfindung. Dabei sind beispielhaft zwei unabhängige, fehlersichere Automatisierungssysteme H1, H2 vorhanden, welche abgekürzt auch als Hosts bezeichnet werden können. Diese tauschen über jeweils einen zugeordneten Feldbusmaster H1F bzw. H2F und einen vernetzten Feldbus F insbesondere Prozessdaten mit einem nicht näher dargestellten technischen Prozess aus. Dabei ist in Fig. 1 auch der Feldbus F ohne detaillierte Einzelkomponenten nur symbolisch dargestellt. An den Feldbus F sind beispielhaft zwei Stationen A bzw. B datentechnisch angekoppelt, welche jeweils eine Vielzahl von Steckplätzen zur Aufnahme von Modulen bereitstellen. Aus Gründen der besseren Übersicht sind keine Signalkabel zur Verbindung der Module mit Betriebsmitteln eines technischen Prozesses gezeigt.

So ist die beispielhafte Station A über einen Stationskopf AK datentechnisch nach außen mit dem Feldbus F und intern mit einem Rückwandbus AR verbunden. Die Station A stellt exemplarisch fünf Steckplätze AP1 - AP5 zur Aufnahme von Modulen bereit, durch die der Rückwandbus AR hindurchgeschleift ist. Im Beispiel der Fig. 1 sind dabei die Steckplätze AP2, AP3 mit fehlersicheren Modulen AF1, AF2 und der Steckplatz AP5 mit einem Busabschlussmodul AB belegt, während die Steckplätze AP1, AP4 frei sind. In vergleichbarer Weise ist die Station B über einen Stationskopf BK datentechnisch nach außen mit dem Feldbus F und intern mit einem Rückwandbus BR verbunden. Die Station B stellt exemplarisch sechs Steckplätze BP1 - BP6 zur Aufnahme von Modulen bereit, durch die der Rückwandbus BR hindurchgeschleift ist. Im Beispiel der Fig. 1 sind dabei die Steckplätze BP1, BP5 Standardmodulen BS1, BS2, bzw. die Steckplätze BP2, BP4 mit fehlersicheren Modulen BF1, BF2 und der Steckplatz BP6 mit einem Busabschlussmodul BB belegt, während der Steckplatz BP3 frei ist.

Wie in Fig. 1 durch strichlierte Pfeile dargestellt, ist das fehlersichere Modul AF2 beispielhaft der Zentraleinheit H2, d.h. dem Host H2, zugeordnet, während die fehlersicheren Module AF1, BF1, BF2 der Zentraleinheit H1, d.h. dem Host H1, zugeordnet sind. Es ist also ohne weiteres möglich, dass die einzelnen fehlersicheren Module auf unterschiedliche Stationen A, B verteilt sind. Jedem Modul ist eine eigene Adressbeziehung zugeordnet, welche einen sicheren Datenaustausch über den Feldbus F mit der jeweils übergeordneten Zentraleinheit ermöglicht. In der Adressbeziehung sind adresstechnisch die jeweilige topologische Platzierung in einer Station und einem Steckplatz, und gegebenenfalls die Zuordnung zu einem Subnetz kodiert. Vorteilhaft können weitere Daten, wie z.B. eine Kennung zur Identifikation des jeweiligen Modultyps bzw. eine Signatur zur Sicherstellung einer fehlerfreien Übertragung der Adressbeziehung hinterlegt sein.

Erfindungsgemäß wird möglichst die umfassende hierarchische Adressbeziehung eines jeden Moduls in einer Station remanent, d.h. netzausfallsicher, in einem zusätzlichen, vom jeweiligen Modul unabhängigen Speicher auf Stationsebene gesichert, welcher auch im Falle eines Tausches des Moduls erhalten bleibt. Dies hat den Vorteil, dass in den internen, nichtflüchtigen Speicher eines Moduls die korrekte Adressbeziehung nachgeladen werden kann, falls dieses Modul an einem bestimmten Steckplatz einer Station die Stelle eines alten, möglicherweise defekten Moduls einnehmen soll.

Vorteilhaft umfasst eine Adressbeziehung, wie oben angegeben, die komplette topologische Adresse des Moduls einschließlich der Adresse der zugehörigen Zentraleinheit und gegebenenfalls einer Kennungen des jeweiligen Modultyps. Auf Grund dieser redundanten Sicherung der kompletten Adressbeziehung in zumindest einem zusätzlichen Speicher auf Stationsebene kann nach einem Austausch des bislang zugeordneten Moduls oder einer beliebigen Netzkomponente die Wiederherstellung einer Adressbeziehung in einem neuen Modul vollautomatisch mit der geforderten Sicherheit z.B. durch die Zentraleinheit vorgenommen werden, ohne dass dabei der Feldbus selbst Eigenschaften für eine Sicherheitstechnik aufweisen muss. Nach der Verfügbarkeit einer definierten Adressbeziehung gemäß Projektierung ist dann ein sicherer Datenaustausch mit dem Host wieder möglich. Dieser prüft die Adressbeziehung bei jeder Datenübertragung durch ein Failsafe Kommunikationsprotokoll. Die Erfindung weist den besonderen Vorteil auf, dass mögliche zwischenzeitlich eingetretene Adressierungsfehler im Rahmen der Wiederherstellung automatisch aufgedeckt und korrigiert werden. Dabei kann es sich um Hardwarefehler z.B. im Rückwandbus oder anderen Buskomponenten, oder Installationsfehler handeln, z.B. Buskabelvertauschungen. Hiermit können die Sicherheitsanforderungen entsprechender Vorschriften, z.B. IEC61508, erfüllt werden.

Gemäß einer ersten Ausführungsform der Erfindung ist auf Stationsebene jedem fehlersicheren Modul ein zusätzliches nichtflüchtiges Speichermittel zur Sicherung der eigenen Adressbeziehung zugeordnet. In der Praxis werden die Steckplätze in einer Station häufig durch Terminalmodule repräsentiert, durch die der Rückwandbus hindurchgeschleift ist und die einen Träger für jedes einzelne Modul bereitstellen. Ein Terminalmodul stellt für ein Modul neben der physikalischen Ankopplung an den Rückwandbus die Verbindung zu I/O - Klemmen zur Verfügung, an denen die Prozesssignalkabel aufgelegt sind. Gemäß einer besonders vorteilhaften Ausführungsform der Erfindung ist jedes Terminalmodul einer Station mit einem eigenen, nicht flüchtigen Speicher ausgestattet, bzw. ermöglicht auf einfache Weise eine zusätzliche Bestückung mit einem solchen. In diesem wird erfindungsgemäß die Adressbeziehung eines eingesteckten Moduls gesichert. Die Adressbeziehung kann über eine Signatur zusätzlich abgesichert werden, um beim Rücklesen eventuelle Fehler aufdecken zu können. Diese Art der separaten und unmittelbar lokal zugeordneten Sicherung einer jeden Adressbeziehung in einem eigenen Speicher, welcher in dem jeweiligen Terminalmodul quasi direkt unterhalb des Moduls platziert ist, ist besonders dann vorteilhaft, wenn der Rückwandbus der jeweiligen Station nicht mit Mitteln ausgestattet ist, womit vom Rückwandbus selbst verursachte Adressierungsfehler vermieden bzw. zumindest aufgedeckt werden können.

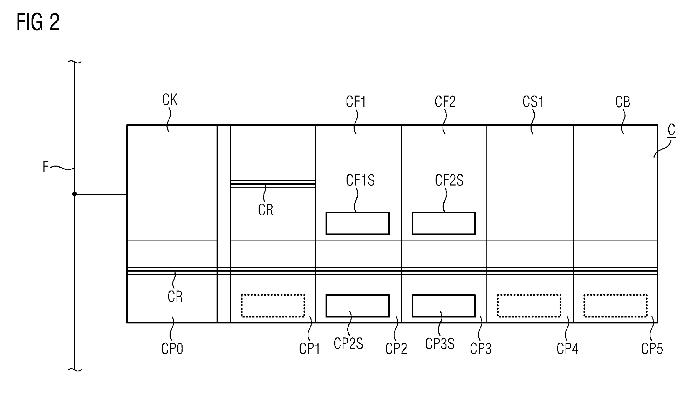

Eine solche Ausführung ist in Fig. 2 am Beispiel der Station C dargestellt, die über einen Stationskopf CK datentechnisch an einen Feldbus F angeschlossen ist. Intern werden Datensignale über einen Rückwandbus CR durch die Steckplätze CP0 - CP5 geschleift. Davon sind der Steckplatz CP0 mit dem Stationskopf CK, die Steckplätze CP2, CP3 mit fehlersicheren Modulen CF1, CF2, der Steckplatz CP4 mit einem Standardmodul CS1 und der Steckplatz CP5 mit einem Busabschlussmodul CB bestückt. Der Steckplatz CP1 ist frei. Erfindungsgemäß sind die Steckplätze CP2, CP3 mit zusätzlichen remanenten Speichern CP2S, CP3S ausgestattet, in denen die Adressbeziehungen der benachbarten fehlersicheren Module CF1, CF2 z.B. für den Fall einer Wiederherstellung in den remanenten Speichern CF1S, CF2S der Module CF1, CF2 gesichert sind. Dabei hat in Fig. 2 die Abkürzung NV-RAM die Bedeutung "non volatile memory". Bei Bedarf können auch die anderen Steckplätze mit zusätzlichen Speichern ausgestattet werden, was durch strichlicht dargestellte NV-RAM Blöcke symbolisiert ist.

Die zusätzlichen, nicht flüchtigen Speicher in den Terminalmodulen sind bevorzugt Schreib- und Lesespeicher. Für den Fall, dass es sich dabei nur um Lesespeicher handelt, so können gemäß einer weiteren Ausgestaltung der Erfindung in diesen eine Kennung hinterlegt sein, z.B. eine eindeutige Seriennummer der Komponente. Diese kann zur Verwaltung einer zusätzlichen Crossreferenzliste in der jeweiligen Zentraleinheit verwendet werden. Diese enthält einen Eintrag für jedes Modul, welcher eine Zuordnung der Seriennummer zur Adressbeziehung des Moduls ermöglicht. Mit Hilfe der Crossreferenzliste kann automatisch festgestellt werden, ob eine Adressbeziehung korrekt ist, ohne dass die Adressbeziehung selbst im Speicher eines Terminalmoduls abgelegt sein muss.

Bei einer weiteren, in den Figuren nicht dargestellten Ausführung der Erfindung kann das zusätzliche Speichermittel quasi im Huckpack auch bei einem ersten Stecken eines fehlersicheren Moduls an das zugehörige Terminalmodul übergeben werden. Im Falle eines Austausches des Moduls verbleibt dann das Speichermittel am Terminalmodul, so dass dann ein Ersatzmodul ohne Speichermittel eingesteckt werden kann.

Bei einer weiteren Ausführung der Erfindung können die Adressbeziehungen aller Module einer Station auch zentral in einem einzigen zusätzlichen Speicherbaustein gesichert werden. Dieser kann in einem Stationskopf oder Busabschlussmodul platziert sein. Es ist auch möglich, das der zusätzliche Speicherbaustein direkt in den Rückwandbus integriert ist, oder mittels eines speziellen Moduls über einen Steckplatz mit dem Rückwandbus verbunden wird.

Jedes Modul der Station schickt nach einem Download der Adressbeziehungen durch die Zentraleinheit bzw. den zugeordneten Feldbusmaster seine vollständige Adressbeziehung über den Rückwandbus an den zentralen Speicher. Eine derartige zentrale Sicherung für alle Module einer Station z.B. mittels einer Adressliste im zentralen Speicher ist vorteilhaft dann möglich, wenn die Station mit diversitären bzw. redundanten Adressmechanismen ausgestattet ist. Hiermit kann sicherstellt werden, dass jedem Steckplatz die richtige Adresse automatisch zugewiesen ist, und es kann somit von einer Fehlerfreiheit bei der Adressvergabe durch den Stationskopf ausgegangen werden. In einem solchen Fall kann es ausreichend sein, dass ein betroffenes Modul nur fehlende Daten zur Vervollständigung der eigenen Adressbeziehung aus der Adressliste im zusätzlichen Speicher entnimmt, da die Adresse des eigenen Steckplatzes als fehlerfrei angenommen werden kann. In der Praxis kann es vorteilhaft sein, wenn das Modul nach einer solchen Vervollständigung der Adressbeziehung diese in einem weiteren Schritt nochmals mit den Projektierdaten vergleicht. Diese werden entweder erneut empfangen oder sind gesichert abgespeichert. Erst wenn dieser Vergleich positive beendet werden kann, nimmt das Modul den sicheren Betrieb auf und übernimmt die aktualisierte Adressbeziehung in den eigenen nichtflüchtigen Speicher.

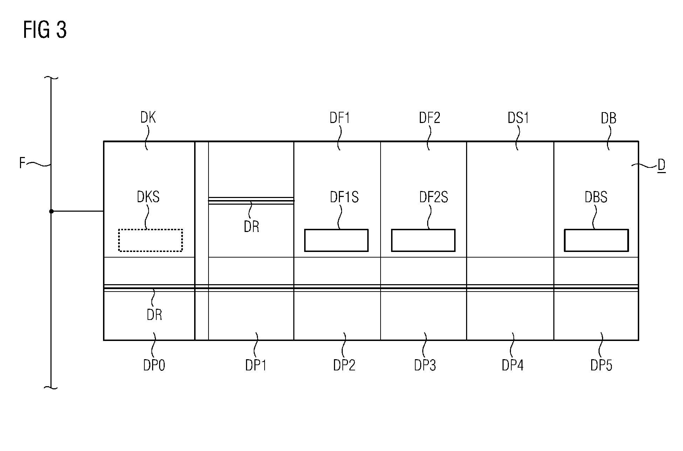

Eine solche Ausführung ist in Fig. 3 am Beispiel der Station D dargestellt, die über einen Stationskopf DK datentechnisch an einen Feldbus F angekoppelt ist. Intern werden die Datensignale über einen Rückwandbus CR durch die Steckplätze DP0 - DP5 geschleift. Davon sind der Steckplatz DP0 mit dem Stationskopf DK, die Steckplätze DP2, DP3 mit fehlersicheren Modulen DF1, DF2, der Steckplatz DP4 mit einem Standardmodul DS1 und der Steckplatz DP5 mit einem Busabschlussmodul DB bestückt. Der Steckplatz DP1 ist frei. Erfindungsgemäß ist das Busabschlussmodul DB mit einem zusätzlichen remanenten Speichern DBS ausgestattet, in dem die Adressbeziehungen der fehlersicheren Module CF1, CF2 der Station D zentral gesichert sind. Alternativ kann auch der Stationskopf DK mit einem solchen Speicher ausgestattet sein, was durch einen strichlichten NV-RAM Block symbolisiert ist. Damit können die Inhalte der remanenten Speicher DF1S, DF2S der Module DF1, DF2 mit gültigen Adressbeziehungen aus dem remanente Speicher DBS des Busabschlussmoduls DB aktualisiert werden.

Die im Beispiel der Fig. 3 dargestellte Ausführung ist auch dann funktionsfähig, wenn das Busabschlussmodul bzw. der Stationskopf ausgetauscht werden muss, und die in dem dortigen zweiten Speicher zentral gesicherte Adressliste der Adressbeziehungen aller Module verloren geht. Ein neues Busabschlussmodul fordert dann von allen in der Station gesteckten Modulen die Adressbeziehungen an, um die Adressliste intern neu anzulegen. Sicherheitshalber kann in diesem Falle vorgesehen sein, dass nur diejenigen Module die Adressbeziehung dem Busabschlussmodul bzw. Stationskopf mitteilen, bei denen ein vorheriger Vergleich der lokalen Adressbeziehung im internen Speicher mit den zentral im Host hinterlegten Projektierdaten zu einem positiven Ergebnis geführt hat.

**Patentansprüche**

1.  Industrielles Automatisierungssystem zur Steuerung der Betriebsmittel eines technischen Prozesses, mit

    - fehlersicheren Modulen (CF1, CF2; DF1, DF2) zum Austausch von Prozessdaten mit den Betriebsmitteln, insbesondere von Stell- und Messsignalen,
    - Stationen (C, D), welche über einen Rückwandbus (CR, DR) verbundene Steckplätze (CPO-CP5; DPO-DP5) für fehlersichere Module (CF1, CF2; DF1, DF2) aufweisen, und mit
    - einer Zentraleinheit (H1, H2) zumindest zur Verarbeitung von Prozesssignalen des technischen Prozesses,

    **dadurch gekennzeichnet, dass**

    - die Adressbeziehung eines fehlersicheren Moduls (CF1, CF2; DF1, DF2) zur eindeutigen datentechnischen Adressierung durch die Zentraleinheit (H1, H2) in einem ersten Speicher (CF1S, CF2S; DF1S, DF2S) im fehlersicheren Modul remanent hinterlegt ist, und
    - die Adressbeziehungen der fehlersicheren Module (CF1, CF2; DF1, DF2) einer Station (C, D) remanent gesichert sind.

2.  Automatisierungssystem nach Anspruch 1, **dadurch gekennzeichnet, dass** einem fehlersicheren Modul (CF1, CF2) einer Station (C, D) zur Sicherung der Adressbeziehung ein zusätzliches nichtflüchtiges Speichermittel (CP2S, CP3S) auf Stationsebene (C) zugeordnet ist.

3.  Automatisierungssystem nach Anspruch 2, **dadurch gekennzeichnet, dass** das Speichermittel (CP2S, CP3S) dem Steckplatz (CP2S, CP3S) des fehlersicheren Moduls (CF1, CF2) direkt zugeordnet ist.

4.  Automatisierungssystem nach Anspruch 3, **dadurch gekennzeichnet, dass** das Speichermittel (CP2S, CP3S) in einem zum Steckplatz (CP2S, CP3S) gehörigen Terminalmodul des fehlersicheren Moduls (CF1, CF2) untergebracht ist.

5. Automatisierungssystem nach Anspruch 4, **dadurch gekennzeichnet, dass** das Speichermittel (CP2S, CP3S) dem zum Steckplatz (CP2S, CP3S) gehörigen Terminalmodul beim Stecken des fehlersicheren Moduls (CF1, CF2) übergeben werden.

6. Automatisierungssystem nach Anspruch 1, **gekennzeichnet durch** ein zentrales nichtflüchtiges Speichermittel (DKS, DBS) auf Stationsebene (D) zur Sicherung der Adressbeziehungen aller fehlersicheren Module (DF1, DF2) der Station (D).

7. Automatisierungssystem nach Anspruch 6, **dadurch gekennzeichnet, dass** das zentrale nichtflüchtige Speichermittel (DKS) in einem Kopf (DK) der Station (D) angeordnet ist.

8. Automatisierungssystem nach Anspruch 6, **dadurch gekennzeichnet, dass** das zentrale nichtflüchtige Speichermittel (DBS) in einem Abschlussmodul (DB) für den Rückwandbus (DR) der Station (D) angeordnet ist.

9. Automatisierungssystem nach Anspruch 6, **dadurch gekennzeichnet, dass** das zentrale nichtflüchtige Speichermittel (DBS) in einem speziellen Modul, welches über einen Steckplatz mit dem Rückwandbus kommuniziert, angeordnet ist.

10. Automatisierungssystem nach Anspruch 6, **dadurch gekennzeichnet, dass** das zentrale nichtflüchtige Speichermittel (DBS) im Rückwandbus (DR) der Station (D) angeordnet ist.

FIG 1

EP 2 233 991 A1

FIG 2

9

FIG 3

Europäisches Patentamt
European Patent Office
Office européen des brevets

## EUROPÄISCHER RECHERCHENBERICHT

**Nummer der Anmeldung**

EP 09 15 6151

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2006/008257 A (SIEMENS AG [DE]; HAUF RONALD [DE]) 26. Januar 2006 (2006-01-26) | 1 | INV. G05B19/042 |
| A | * Seite 6, letzter Absatz - Seite 10, Absatz 1; Abbildungen 1,2 *<br>----- | 2-10 | |
| X | WO 00/34835 A (GEN ELECTRIC [US]) 15. Juni 2000 (2000-06-15) | 1 | |
| A | * Seite 5, Absatz 4 - Seite 9, Absatz 2; Abbildungen 1,2 *<br>----- | 2-4 | |
| A | US 6 964 045 B1 (GRIMES JAMES E [US] ET AL) 8. November 2005 (2005-11-08) * Spalte 2, Zeile 13 - Spalte 3, Zeile 47; Abbildung 1 *<br>----- | 1-3,6-10 | |
| X | US 2005/057870 A1 (STELLATO FLAVIANO [CA] ET AL STELLATO FLAVIANO [CA] ET AL) 17. März 2005 (2005-03-17) | 1 | |
| A | * Seite 5, Absatz 59 - Absatz 61; Abbildungen 5,6 *<br>----- | 2-10 | **RECHERCHIERTE SACHGEBIETE (IPC)** |
| X | US 2003/191542 A1 (IWAMOTO KOJI [JP]) 9. Oktober 2003 (2003-10-09) | 1 | G05B |
| A | * Seite 4, Absatz 96 - Seite 5, Absatz 104; Abbildung 1 *<br>----- | 2-10 | |

Der vorliegende Recherchenbericht wurde für alle Patentansprüche erstellt

| Recherchenort | Abschlußdatum der Recherche | Prüfer |
|---|---|---|
| Den Haag | 22. September 2009 | Nettesheim, Johannes |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 15 6151

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-09-2009

| Im Recherchenbericht angeführtes Patentdokument | | Datum der Veröffentlichung | Mitglied(er) der Patentfamilie | | Datum der Veröffentlichung |
|---|---|---|---|---|---|
| WO 2006008257 | A | 26-01-2006 | DE 102004034862 | A1 | 16-03-2006 |
| | | | EP 1769293 | A1 | 04-04-2007 |
| | | | US 2007255429 | A1 | 01-11-2007 |
| WO 0034835 | A | 15-06-2000 | CN 1290360 | A | 04-04-2001 |
| | | | EP 1055160 | A1 | 29-11-2000 |
| | | | HU 0102030 | A2 | 28-09-2001 |
| US 6964045 | B1 | 08-11-2005 | KEINE | | |
| US 2005057870 | A1 | 17-03-2005 | KEINE | | |
| US 2003191542 | A1 | 09-10-2003 | US 2003191543 | A1 | 09-10-2003 |

EPO FORM P0461

Für nähere Einzelheiten zu diesem Anhang : siehe Amtsblatt des Europäischen Patentamts, Nr.12/82